# FASCICULE DE BREVET EUROPEEN

(11) **EP 0 674 204 B1**
(45) Date de publication et mention de la délivrance du brevet: **16.10.2002**
(21) Numéro de dépôt: 95400620.1
(22) Date de dépôt: 21.03.1995
(51) Int. Cl.: G02B 27/00

(54) **Vitrage pour véhicule et feuille de matière plastique utilisée dans ce vitrage**
Glasscheibe für optisches System und in der Scheibe benutzte Kunststofffolie
Glass for optical system and plastic foil used therein

(30) Priorité: 22.03.1994 FR 9403330
(43) Date de publication de la demande: 27.09.1995
(73) Titulaire: SAINT-GOBAIN GLASS FRANCE, 92400 Courbevoie (FR); ASAHI GLASS, Chiyoda-Ku, Tokyo 100 (JP)
(72) Inventeur: Morin, Claude M., F-92800 Puteaux (FR); Bravet, Jean-Louis M., F-60150 Thourotte (FR)
(74) Mandataire: Muller, René

(56) Documents cités:
- EP-A- 0 038 760
- EP-A- 0 131 483
- EP-A- 0 132 198
- EP-A- 0 190 517
- EP-A- 0 389 354
- EP-A- 0 420 228
- WO-A-91/06031
- WO-A-94/00787
- DE-A- 2 629 779
- FR-A- 2 347 170
- FR-A- 2 680 584
- PATENT ABSTRACTS OF JAPAN vol. 11 no. 141 (C-421) ,8 Mai 1987 & JP-A-61 281118 (ASAHI GLASS CO LTD) 11 Décembre 1986,
- DATABASE WPI Week 8638 Derwent Publications Ltd., London, GB; AN 86-249110 & JP-A-61 177 241 (ASAHI GLASS CO LTD) , 8 Août 1986

## Description

La présente invention concerne un vitrage pour véhicule, notamment un vitrage de haute qualité optique pouvant le cas échéant être disposé sous forte inclinaison, et plus particulièrement un vitrage permettant la visualisation d'informations par affichage d'images projetées sur le vitrage, qui semblent être localisées en avant du véhicule.

Des systèmes d'affichage d'informations projetées sur un vitrage qui se réfléchissent vers le conducteur ou l'observateur sont connus. Ces systèmes encore appelés systèmes de visualisation tête haute permettent notamment d'informer le conducteur du véhicule, par exemple de son fonctionnement, sans que le conducteur éloigne son regard du champ de vision en avant du véhicule, ce qui par conséquent accroît la sécurité.

Lorsqu'on projette une information sur un pare-brise ayant une structure feuilletée formée de deux feuilles de verre et d'un intercalaire en matière plastique, on observe une double image : une première image réfléchie par la surface du pare-brise orientée vers l'intérieur de l'habitable et une seconde image par réflexion de la surface extérieure du pare-brise, ces deux images étant légèrement décalées l'une par rapport à l'autre. Ce décalage peut perturber la vision de l'information.

Pour pallier à cet inconvénient, on a déjà proposé comme décrit dans l'US-A-5 013 134 un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur.

Pour réaliser ce vitrage feuilleté en forme de coin on utilise une feuille intercalaire dont l'épaisseur décroit du bord supérieur du vitrage au bord inférieur.

Cette solution si elle est satisfaisante en terme de suppression de double image présente néanmoins d'autres inconvénients. En particulier l'assemblage du vitrage feuilleté nécessite de plus grandes précautions, notamment lors du passage dans une calandreuse, du fait des faces des deux feuilles de verre non parallèles. En outre, et surtout le PVB par fluage au cours de l'assemblage sous pression à chaud peut perdre son profil initial d'épaisseur. Or la valeur et la régularité de la décroissance du profil dans la zone de réflexion sont essentielles à la bonne marche de la solution. De plus, avec une structure feuilletée comportant deux feuilles de verre il n'est pas possible de réaliser des vitrages en forme de coin sur une partie seulement de leur hauteur, à moins d'usiner la face de la feuille de verre orientée vers l'habitacle, ce qui est très difficile à mettre en oeuvre et quasi impossible s'il s'agit d'une feuille de verre bombée.

L'invention obvie aux inconvénients cités.

Elle propose un vitrage comprenant un substrat monolithique ou feuilleté en verre et/ou en matière plastique et une couche de matière plastique recouvrant la surface du substrat, cette couche présentant une épaisseur variable au moins dans une zone prédéterminée du vitrage de sorte que les surfaces extérieures du vitrage ne soient pas parallèles dans cette zone, ladite couche de matière plastique recouvre un substrat (14) monolithique ou feuilleté, en verre ou en matière plastique, en ce que ladite couche est située sur une surface extérieure du vitrage et en ce qu'elle est constituée d'au moins deux couches de polyuréthane, une au moins étant constituée d'un polyuréthane à caractère thermoplastique (23) ayant des propriétés d'absorbeur d'énergie mécanique, une autre dite de surface étant constituée d'un polyuréthane thermodurcissable (24), au moins une de ces couches présentant une épaisseur variable, décroissante dans au moins une zone.

Dans une forme de réalisation du vitrage, la couche de matière plastique présentant une épaisseur variable sur au moins une zone, recouvre essentiellement toute la surface du substrat.

Le vitrage asymétrique selon l'invention peut être utilisé avec avantage dans toute application en tant que solution au problème de la double image pour un observateur placé à l'intérieur de l'habitacle, due à la réflexion d'un rayon lumineux sur les deux faces du vitrage, que ce rayon provienne d'un objet situé à l'extérieur du vitrage ou que ce rayon soit initialement projeté sur la face orientée vers l'intérieure de l'habitacle du vitrage, c'est-à-dire la face de la couche de matière plastique.

Lorsque le vitrage est destiné à recevoir une information projetée, comme décrit précédemment, la zone prédéterminée correspond à au moins la zone de projection de l'information. Dans ce cas, la couche de matière plastique transparente présente une décroissance régulière d'épaisseur, de haut en bas, au moins dans la zone prédéterminée, lorsque le vitrage est incliné dans le sens traditionnel.

Dans une réalisation du vitrage selon l'invention la couche de matière plastique présente une épaisseur variable sur toute la hauteur du vitrage et notamment une épaisseur qui décroit régulièrement selon une pente constante du bord supérieur du vitrage au bord inférieur.

Dans une autre réalisation du vitrage selon l'invention la couche de matière plastique présente une épaisseur constante sur au moins une partie de la hauteur du vitrage et une épaisseur décroissance avec une pente constante de haut en bas sur la partie prédéterminée, celle-ci étant généralement la partie médiane et inférieure du vitrage.

Par couche de matière plastique, on entend selon l'invention aussi bien une feuille à une ou plusieurs couches, ou à un ou plusieurs films, cette feuille qui est aussi un des objets de l'invention pouvant être fabriquée au préalable et assemblée avec le substrat, qu'une ou plusieurs couches fabriquées directement sur le substrat par pulvérisation et/ou injection à l'aide d'un moule. Au moins une de ces couches ou au moins un de ces films a une épaisseur variable dans la zone prédéterminée du vitrage. Les couches superposées peuvent être de nature différente. Dans un vitrage pour véhicule, la couche de matière plastique selon l'invention est la couche extérieure orientée vers l'habitacle.

Dans une réalisation selon l'invention, la couche d'épaisseur variable est une couche de polyuréthane. Lorsque la couche de matière plastique est formée de plusieurs couches, par exemple deux couches de polyuréthane : une couche de polyuréthane ayant par exemple des propriétés d'absorbeur d'énergie, de résistance aux chocs et à la pénétration, et une couche dite de surface ayant des propriétés de résistance à l'abrasion et à la rayure, la variation d'épaisseur selon l'invention peut être réalisée sur la couche ayant des propriétés d'absorbeur d'énergie ou sur la couche de surface, selon les épaisseurs respectives des différentes couches et selon les variations d'épaisseurs désirées.

La variation d'épaisseur est plutôt réalisée sur la couche ayant une épaisseur moyenne plus importante.

Pour réduire substantiellement ou éliminer la double image notamment la double image de réflexion, par utilisation d'un vitrage en forme de coin, on considère généralement qu'une décroissance d'épaisseur de la couche de matière plastique avec une pente de 0,1 à 0,4 mm par mètre, doit donner satisfaction.

Cette valeur qui peut être déterminée par l'homme de métier, dépend pour une position donnée de l'observateur par rapport à la source image et par rapport à l'image virtuelle, notamment comme décrit par exemple dans l'US-A-5 013 134 déjà cité, de l'angle d'inclinaison du vitrage dans le véhicule, de l'épaisseur du vitrage, de l'angle d'incidence de l'image projetée et aussi de la courbure du vitrage.

Dans une réalisation préférée de l'invention, la couche de matière plastique est une feuille préformée comprenant une couche de polyuréthane d'épaisseur variable.

Une couche de polyuréthane présentant la variation d'épaisseur désirée peut être avantageusement réalisée par coulée des composants réactionnels apte à former la couche à l'aide d'une filière ou d'une tête de coulée à racle telle que décrite par exemple dans le brevet FR-A-2 347 170, en agissant sur la hauteur de la racle par rapport au support de coulée, ou encore en agissant sur les dimensions de la fente de coulée, ou encore le cas échéant en utilisant un support de coulée ayant une inclinaison transversale et en jouant sur la gravité de la couche coulée non encore figée.

Ainsi, on peut former une première couche d'épaisseur uniforme, par exemple la couche de polyuréthane ayant des propriétés de surface par coulée des composants réactionnels sur un support formé d'un ruban continu en verre ou en matière plastique souple tendu par exemple en (polyéthylènetéréphtalate), puis former sur cette première couche la seconde couche de polyuréthane ayant les propriétés d'absorbeur d'énergie, avec une épaisseur décroissante dans le sens de la largeur et selon une pente constante, par exemple de l'ordre de 0,2 à 0,3 mm par mètre de largeur.

Des polyuréthanes convenables pour fabriquer ces couches dont une au moins présente une épaisseur décroissante pour une application dans un vitrage en coin selon l'invention sont par exemple ceux décrits dans les publications de brevets FR-A-2 480 669, FR-A-2 546 810, FR-A-2 398 606, EP-A-0 132 198, EP-A-0 389 354, EP-A-0 190 517 ou encore JP-A-86 177 241 et JP-A-86 281 118 desquelles l'homme de métier pourra tirer l'enseignement nécessaire.

Un des avantages de l'utilisation d'une feuille de matière plastique à base de polyuréthane comme décrit ci-dessus est qu'elle n'est pas sujette à un fluage au cours de l'assemblage avec le substrat en verre. De sorte que la décroissance d'épaisseur obtenue lors de la fabrication de la couche de polyuréthane est conservée après l'assemblage avec le verre.

L'assemblage de la feuille de matière plastique a deux couches de polyuréthane, avec le substrat notamment une feuille de verre peut être réalisé par assemblage directe de la couche ayant des propriétés d'absorbeur d'énergie avec le substrat en verre ou à l'aide d'un film adhésif supplémentaire par exemple en polyuréthane thermoplastique d'épaisseur comprise entre 2 et 20 µm par exemple.

Un autre avantage du vitrage en coin selon l'invention qui utilise une feuille de matière plastique en tant que couche extérieure orientée vers l'habitacle, est qu'il permet le cas échéant un profil d'épaisseur plus complexe qu'un vitrage feuilleté en coin connu. En effet, il est bien plus aisé de modifier de manière désirée l'épaisseur de la feuille de matière plastique que l'épaisseur d'une feuille de verre. On peut ainsi fabriquer un vitrage pouvant présenter des zones d'épaisseur constante et des zones d'épaisseur variable réparties sur la hauteur du vitrage.

Un autre avantage du vitrage en coin selon l'invention dans sa variante utilisant en tant que substrat une seule feuille de verre est qu'il peut être plus mince qu'un vitrage feuilleté en coin connu. La décroissance d'épaisseur du vitrage d'un bord à l'autre de sa hauteur peut alors être plus faible que dans un vitrage feuilleté en coin pour résoudre le problème de la double image. En effet, plus le vitrage est épais et plus la partie de la décroissance d'épaisseur doit être importante pour résoudre ce problème.

En outre, un vitrage à substrat monolithique selon l'invention présente une meilleure qualité optique notamment sous forte inclinaison qu'un vitrage feuilleté en coin.

D'autres avantages et caractéristiques de l'invention apparaitront dans la suite de la description faite en référence aux figures et à des exemples de réalisation.

La figure 1 représente schématiquement un système connu de visualisation tête haute utilisant en tant que support de réflexion un vitrage automobile à faces parallèles.

La figure 2 représente schématiquement un système de visualisation tête haute utilisant en tant que support de réflexion un vitrage en coin selon l'invention.

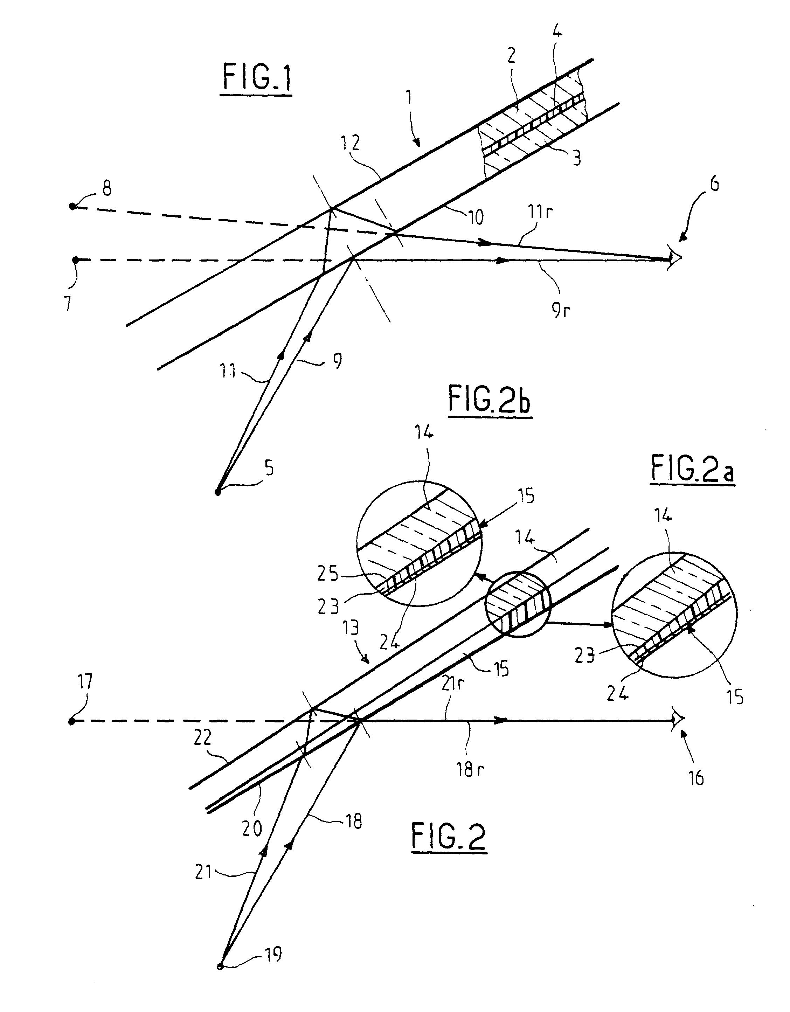

Les figures partielles 2a et 2b représentent des formes de réalisation du vitrage en coin de la figure 2.

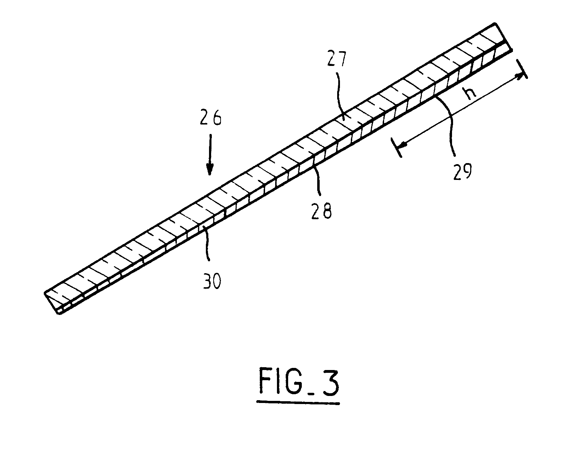

La figure 3 représente schématiquement une variante de l'invention utilisant une feuille de matière plastique d'épaisseur variable sur une partie de la hauteur du vitrage.

Les figures sont schématiques et bien entendu les dimensions et les rapports entre ces dimensions ne correspondent pas aux dimensions et rapports réels.

Le système de visualisation de l'état de la technique représenté sur la figure 1 utilise un pare-brise feuilleté 1 formé de deux feuilles de verre 2, 3 et d'un intercalaire 4 en polyvinylbutyral. La source image 5 projetée sur le pare-brise est vue par l'observateur 6 placé à l'intérieur de l'habitacle du véhicule, sous forme d'image principale 7 et sous forme d'image secondaire 8 décalée. L'image principale 7 est due à la réflexion 9r du rayon lumineux 9 issu de la source image 5 sur la face 10 orientée vers l'intérieur du véhicule alors que l'image secondaire 8 est due à la réflexion 11r du rayon lumineux 11 issu de la source image 5 sur la face 12 orientée vers l'extérieur du véhicule.

L'image vue par l'observateur dans le véhicule est ainsi dédoublée en une image principale 7 et en une image secondaire 8.

Dans le système représenté sur la figure 2 le vitrage 13 en forme de coin est constitué d'une feuille de verre 14 d'épaisseur comprise entre 2 et 5 mm par exemple et d'une feuille de matière plastique 15 dont l'épaisseur décroit régulièrement d'une valeur déterminée en partant du haut du vitrage vers le bas. L'observateur 16 placé comme précédemment n'aperçoit plus qu'une seule image virtuelle 17. En effet, la réflexion 18r du rayon lumineux 18 issu de la source d'image 19 sur la face extérieure 20 de la feuille de matière plastique orientée vers l'habitacle du véhicule, procure la même image virtuelle 17 que la réflexion 21 r du rayon lumineux 21 issu de la source image 19 sur la face extérieure 22 de la feuille de verre 14.

La feuille de matière plastique 15 associée à la feuille de verre 14 est selon une réalisation telle que représentée sur la figure 2a formée de deux couches de polyuréthane : une couche 23 ayant des propriétés d'absorbeur d'énergie et adhésive, d'épaisseur moyenne comprise entre 0,3 et 2 mm par exemple, au contact de la feuille de verre, cette couche 23 présentant une décroissance d'épaisseur avec une pente constante sur toute la hauteur du vitrage en partant du haut vers le bas et une couche de surface 24 d'épaisseur uniforme comprise entre 0,05 et 1 mm par exemple. La pente de la décroissance est de l'ordre de 0,1 à 0,4 mm par mètre par exemple.

La réalisation représentée sur la figure 2b utilise une feuille de matière plastique 15 formée en outre d'une fine couche adhésive 25 d'épaisseur comprise entre 2 et 20 µm, par exemple en un polyuréthane thermoplastique.

La feuille de matière plastique 15 sera décrite plus en détail par la suite.

Sur la figure 3, le vitrage 26 destiné à éliminer la double image de réflexion est formé d'une feuille de verre 27 et d'une feuille de matière plastique 28 qui présente une épaisseur uniforme dans la partie haute 29 du vitrage sur une hauteur h qui correspond par exemple au 1/3 de la hauteur totale et une épaisseur décroissante dans la partie médiane et inférieure 30 de vitrage, cette partie étant destinée à l'affichage d'informations.

Pour réaliser le vitrage représenté sur la figure 2b, on peut procéder de la manière suivante :

### EXEMPLE

On fabrique une feuille de matière plastique d'environ 1 mètre de large comprenant trois couches de polyuréthane destinée à être assemblée avec un substrat monolithique en verre. Les trois couches de polyuréthane sont respectivement une couche de surface à base d'un polyuréthane thermodurcissable d'épaisseur constante, une couche ayant des propriétés d'absorbeur d'énergie à base d'un polyuréthane à caractère thermoplastique, d'épaisseur décroissante, adjacente à la troisième couche qui est une couche adhésive à base d'un polyuréthane thermoplastique d'épaisseur constante.

Sur un support continu en verre ou en une matière plastique souple tendue telle qu'un film de polyéthylène-téréphtalate, on coule un mélange réactionnel d'un composant isocyanate comprenant un trimère d'hexaméthylène-diisocyanate et d'un composant polyol comprenant un poly-(∈-caprolactone)polyol trifonctionnel. L'épaisseur de la couche est d'environ 100 µm.

Sur cette première couche, on forme une seconde couche ayant des propriétés d'absorbeur d'énergie par coulée d'un mélange réactionnel d'un composant polyol comprenant au moins un polyol de masse moléculaire comprise entre 400 et 4000, au moins un diol court de masse moléculaire inférieure à 300 par exemple du 1,4-butanediol, et à raison d'environ 10 parties en poids du composant polyol, un polycaprolactone triol, et d'un composant isocyanate comprenant du bis (4-isocyanatocyclohexyl) méthane. On utilise une tête de coulée à racle ou une filière pour une coulée type rideau en réglant la tête de coulée ou la filière afin d'obtenir une épaisseur de 1,05 mm d'un côté de la couche, qui décroit régulièrement avec une pente constante de 0,23 mm par mètre jusqu'à une épaisseur de 0,81 mm de l'autre côté.

Sur cette couche en coin ayant des propriétés d'absorbeur d'énergie on amène un film de polyuréthane thermoplastique de 5 µm d'épaisseur obtenu à partir d'une solution d'une résine de polyuréthane, elle-même obtenue à partir d'un composant polyol comprenant du poly (ε-ca-prolactone)polyol de masse moléculaire comprise entre 1000 et 2000, et de fonctionnalité 2 et du 1,4-butanediol, et d'un composant isocyanate comprenant un mélange de bis (4-isocyanatocyclohexyl) méthane et de 3-isocyanatométhyl-3,5,5-triméthylcyclohexylisocyanate.

La feuille de matière plastique ainsi fabriquée est assemblée avec une feuille de verre de 3,1 mm d'épaisseur en disposant la feuille de matière plastique avec sa partie plus épaisse dans le haut du vitrage et sa partie plus mince dans le bas pour former un vitrage feuilleté asymétrique en forme de coin pouvant être utilisé notamment en tant que pare-brise de sécurité permettant la visualisation d'informations dans un véhicule automobile. L'assemblage peut s'effectuer en deux étapes, une première étape consistant en un assemblage préliminaire obtenu par passage des éléments constitutifs du vitrage dans une calandreuse ou en variante dans un dispositif d'assemblage sous vide, et une seconde étape consistant en un cycle d'autoclave au cours duquel le vitrage est soumis durant 30 minutes à une pression d'environ 8 bars, et à une température d'environ 140°C. Au cours de ces opérations d'assemblage, le profil de l'épaisseur de la feuille de matière plastique n'est pas affecté.

Le vitrage obtenu, utilisé en tant que pare-brise de véhicule, monté avec une inclinaison de 28° par rapport à l'horizontale permet la suppression de la double image de réflexion d'une source image projetée sur ce pare-brise. A titre de comparaison, cette double image projetée par la même source sur un pare-brise feuilleté en coin comme décrit dans l'US-A-5 013 134, dont l'épaisseur moyenne est de 5,6 mm, placé dans les mêmes conditions, nécessite une décroissance d'épaisseur pour l'intercalaire PVB de 0,31 mm par mètre.

Par rapport à un pare-brise feuilleté en coin connu, le vitrage selon l'invention présente donc de nombreux avantages.

Il autorise une pente de décroissance plus faible, donc plus facile à réaliser. En présentant une face en matière plastique (celle constituée par la couche de matière plastique d'épaisseur variable), il offre beaucoup plus de possibilités dans ces variations d'épaisseurs.

Le vitrage selon l'invention peut être un vitrage plan ou plus généralement un vitrage bombé pour pouvoir être utilisé en tant que pare-brise de véhicule. La décroissance désirée pour la couche de matière plastique peut bien entendue varier selon la courbure du vitrage.

Le substrat est généralement constitué d'une feuille de verre qui peut être du verre recuit, du verre trempé thermiquement ou chimiquement, du verre semi-trempé.

L'invention concerne aussi un système de visualisation tête haute comprenant un vitrage à deux couches : un substrat monolithique ou feuilleté et un couche de matière plastique dont le profil d'épaisseur variable est destiné notamment à éliminer la double image de réflexion.

## Revendications

1. Vitrage comprenant une couche de matière plastique transparente et de haute qualité optique, ladite couche présentant une épaisseur variable décroissante dans au moins une zone prédéterminée du vitrage de sorte que les surfaces extérieures (20, 22) du vitrage ne soient pas parallèles dans cette zone, ladite couche de matière plastique recouvrant un substrat (14) monolithique ou feuilleté, en verre ou en matière plastique, **caractérisé en ce que** ladite couche est située sur une surface extérieure du vitrage **et en ce qu**'elle est constituée d'au moins deux couches de polyuréthane, une au moins étant constituée d'un polyuréthane à caractère thermoplastique (23) ayant des propriétés d'absorbeur d'énergie mécanique, une autre dite de surface étant constituée d'un polyuréthane thermodurcissable (24), au moins une de ces couches présentant une épaisseur variable, décroissante dans au moins une zone.

2. Vitrage selon la revendication 1, **caractérisé en ce que** la couche de matière plastique recouvre essentiellement toute la surface du substrat.

3. Vitrage selon une des revendications 1 ou 2, **caractérisé en ce que** dans la zone prédéterminée la couche présente une épaisseur décroissant régulièrement.

4. Vitrage selon la revendication 3, **caractérisé en ce que** la zone prédéterminée recouvre tout le vitrage, l'épaisseur décroissant régulièrement avec une pente constante d'un bord supérieur à un bord inférieur du vitrage.

5. Vitrage selon la revendication 3, **caractérisé en ce que** la zone prédéterminée est une partie médiane et inférieure du vitrage.

6. Vitrage selon l'une des revendications 1 à 5, **caractérisé en ce q**ue la couche de polyuréthane présentant une épaisseur variable est la couche (23) ayant des propriétés d'absorbeur d'énergie mécanique.

7. Utilisation du vitrage, selon une des revendications 1 à 6, dans un système de visualisation d'information par réflexion sur le vitrage, en vue d'atténuer substantiellement ou d'éliminer totalement la double image due à la réflexion sur le vitrage.

8. Feuille de matière plastique transparente, de haute qualité optique, comprenant au moins une zone d'épaisseur variable, décroissante dans au moins une zone, notamment en forme de coin, adaptée à être associée à un substrat et à former la couche extérieure d'un vitrage, **caractérisée en ce qu'**elle est constituée d'au moins deux couches de polyuréthane, une au moins étant constituée d'un polyuréthane à caractère thermoplastique (23) ayant des propriétés d'absorbeur d'énergie mécanique, une autre dite de surface étant constituée d'un polyuréthane thermodurcissable (24), au moins une de ces couches présentant une épaisseur variable, décroissante dans au moins une zone.

9. Feuille selon la revendication 8, **caractérisée en ce que** la couche de polyuréthane dont l'épaisseur est variable est la couche de polyuréthane présentant des propriétés d'absorbeur d'énergie.

10. Feuille selon une des revendications 8 à 9, **caractérisée en ce qu**'elle comprend en outre une couche adhésive en polyuréthane thermoplastique.

11. Feuille selon une des revendications 8 à 10, **caractérisée en ce que** la zone d'épaisseur variable est une zone présentant une pente de décroissance constante.

12. Feuille selon la revendication 11, **caractérisée en ce que** la zone de décroissance constante s'étend sur toute la largeur de la feuille.

13. Feuille selon une des revendications 11 ou 12, **caractérisée en ce que** la pente de décroissance est comprise entre 0,1 et 0,4 mm par mètre.

14. Système de visualisation tête haute pour véhicule, comprenant un vitrage et une source image adaptée à la visualisation d'information par réflexion sur le vitrage, dont le profil d'épaisseur est variable, décroissant dans au moins une zone et est destiné notamment à éliminer la double image de réflexion, **caractérisé en ce que** le vitrage comprend une couche de matière plastique (15) qui recouvre un substrat (14) monolithique ou feuilleté, en verre ou en matière plastique, **en ce que** ladite couche est située sur une surface extérieure du vitrage et **en ce qu'**elle est constituée d'au moins deux couches de polyuréthane, une au moins étant constituée d'un polyuréthane à caractère thermoplastique (23) ayant des propriétés d'absorbeur d'énergie mécanique, une autre dite de surface étant constituée d'un polyuréthane thermodurcissable (24), au moins une de ces couches présentant une épaisseur variable, décroissante dans au moins une zone.

## Patentansprüche

1. Glas, das eine transparente Kunststoffschicht mit hoher optischer Qualität umfasst, die eine in mindestens einem festgelegten Bereich des Glases veränderliche Dicke besitzt, die derart abnimmt, dass die Außenflächen (20, 22) des Glases in diesem Bereich nicht parallel sind, und ein monolithisches oder Verbundsubstrat (14) aus Glas oder Kunststoff bedeckt, **dadurch gekennzeichnet, dass** sich diese Schicht auf einer Außenfläche des Glases befindet, **und dass** sie aus mindestens zwei Polyurethanschichten besteht, wovon mindestens eine Schicht aus einem Polyurethan (23) mit thermoplastischem Charakter, das in der Lage ist, mechanische Energie zu absorbieren, und eine als Oberflächenschicht bezeichnete andere aus einem wärmeaushärtbaren Polyurethan (24) besteht, wobei wenigstens eine dieser Schichten eine in mindestens einem Bereich abnehmende veränderliche Dicke besitzt.

2. Glas nach Anspruch 1, **dadurch gekennzeichnet, dass** die Kunststoffschicht im Wesentlichen die gesamte Fläche des Substrats bedeckt.

3. Glas nach Anspruch 1 oder 2, **dadurch gekennzeichnet, dass** die Schicht in dem festgelegten Bereich eine gleichmäßig abnehmende Dicke besitzt.

4. Glas nach Anspruch 3, **dadurch gekennzeichnet, dass** der festgelegte Bereich das gesamte Glas bedeckt und die Dicke mit einem konstanten Abfall von einem oberen Rand zu einem unteren Rand des Glases gleichmäßig abnimmt.

5. Glas nach Anspruch 3, **dadurch gekennzeichnet, dass** der festgelegte Bereich ein mittlerer und unterer Teil des Glases ist.

6. Glas nach einem der Ansprüche 1 bis 5, **dadurch gekennzeichnet, dass** die Polyurethanschicht, die eine veränderliche Dicke besitzt, die Schicht (23) ist, die in der Lage ist, mechanische Energie zu absorbieren.

7. Verwendung des Glases nach einem der Ansprüche 1 bis 6 für ein System zur Anzeige von Informationen durch Reflexion auf dem Glas, um das von der Reflexion auf dem Glas verursachte Doppelbild deutlich abzuschwächen oder es vollständig zu beseitigen.

8. Transparente Kunststofffolie mit hoher optischer Qualität, die mindestens einen Bereich mit veränderlicher Dicke umfasst, die in mindestens einem insbesondere keilförmigen Bereich abnimmt, und welche geeignet ist, mit einem Substrat verbunden zu werden und die Außenschicht eines Glases zu bilden, **dadurch gekennzeichnet, dass** sie aus mindestens zwei Polyurethanschichten besteht, wovon mindestens eine Schicht aus einem Polyurethan (23) mit thermoplastischem Charakter, das in der Lage ist, mechanische Energie zu absorbieren, und eine als Oberflächenschicht bezeichnete andere aus einem wärmeaushärtbaren Polyurethan (24) besteht, wobei wenigstens eine dieser Schichten eine in mindestens einem Bereich abnehmende veränderliche Dicke besitzt.

9. Folie nach Anspruch 8, **dadurch gekennzeichnet, dass** die Polyurethanschicht, deren Dicke veränderlich ist, die Polyurethanschicht mit Energie absorbierenden Eigenschaften ist.

10. Folie nach Anspruch 8 oder 9, **dadurch gekennzeichnet, dass** sie außerdem eine Haftschicht aus thermoplastischem Polyurethan umfasst.

11. Folie nach einem der Ansprüche 8 bis 10, **dadurch gekennzeichnet, dass** der Bereich mit veränderlicher Dicke ein Bereich ist, dessen Dicke konstant abnimmt.

12. Folie nach Anspruch 11, **dadurch gekennzeichnet, dass** der Bereich mit konstanter Dickenabnahme sich über die gesamte Folienbreite erstreckt.

13. Folie nach Anspruch 11 oder 12, **dadurch gekennzeichnet, dass** die Dickenabnahme 0,1 bis 0,4 mm pro Meter beträgt.

14. Anzeigesystem in Augenhöhe für Fahrzeuge, das ein Glas und eine Bildquelle umfasst, die für die Informationsanzeige durch Reflexion auf dem Glas geeignet ist, dessen Dickenquerschnitt veränderlich ist und in mindestens einem Bereich abnimmt, und welches insbesondere zur Beseitigung des doppelten Reflexionsbildes vorgesehen ist, **dadurch gekennzeichnet, dass** das Glas eine Kunststoffschicht (15) umfasst, die ein monolithisches oder Verbundsubstrat (14) aus Glas oder Kunststoff bedeckt, **und dass** sich diese Schicht auf einer Außenfläche des Glases befindet **und aus** mindestens zwei Polyurethanschichten besteht, wovon mindestens eine Schicht aus einem Polyurethan (23) mit thermoplastischem Charakter, das in der Lage ist, mechanische Energie zu absorbieren, und eine als Oberflächenschicht bezeichnete andere aus einem wärmeaushärtbaren Polyurethan (24) besteht, wobei -wenigstens eine dieser Schichten eine in mindestens einem Bereich abnehmende veränderliche Dicke besitzt.

## Claims

1. Glazing comprising a high optical quality, transparent, plastics material coating having a variable thickness decreasing in at least one predetermined zone of the glazing, in such a way that the outer surfaces (20, 22) of the glazing are not parallel in said zone, said plastics material coating covering a monolithic or laminated, glass or plastics material substrate (14), **characterized in that** said coating is located on an outer surface of the glazing and **in that** it is constituted by at least two polyurethane coatings, at least one being formed from a polyurethane having a thermoplastic character (23) with mechanical energy absorbing properties and another, so-called surface coating being formed by a thermosetting polyurethane (24), at least one of said coatings having a variable thickness decreasing in at least one zone.

2. Glazing according to claim 1, **characterized in that** the plastics material coating essentially covers the entire substrate surface.

3. Glazing according to one of the claims 1 or 2, **characterized in that** in the predetermined zone the coating has a regularly decreasing thickness.

4. Glazing according to claim 3, **characterized in that** the predetermined zone covers the entire glazing, the thickness decreasing regularly with a constant gradient from an upper edge to a lower edge of the glazing.

5. Glazing according to claim 3, **characterized in that** the predetermined zone is a median and lower portion of the glazing.

6. Glazing according to one of the claims 1 to 5, **characterized in that** the polyurethane coating having a variable thickness is the coating (23) having the mechanical energy absorbing properties.

7. Use of the glazing according to one of the claims 1 to 6 in a system for the display of information by reflection on the glazing, with a view to substantially attenuating or totally eliminating the double image due to the reflection on the glazing.

8. High optical quality, transparent, plastics material sheet comprising at least one variable thickness zone, decreasing in at least one zone, more particularly in the form of a wedge, intended to be associated with a substrate and for forming the outer coating of a glazing, **characterized in that** it is constituted by at least two polyurethane coatings, at least one being formed from a polyurethane having a thermoplastic character (23) with mechanical energy absorbing properties and another, so-called surface coating being formed from a thermosetting polyurethane (24), at least one of said coatings having a variable thickness decreasing in at least one zone.

9. Sheat according to claim 8, **characterized in that** the variable thickness polyurethane coating is the polyurethane coating having the energy absorbing properties.

10. Sheet according to one of the claims 8 or 9, **characterized in that** it also comprises an adhesive, thermoplastic polyurethane coating.

11. Sheet according to one of the claims 8 to 10, **characterized in that** the variable thickness zone is a zone having a constant decreasing gradient.

12. Sheet according to claim 11, **characterized in that** the constant decreasing zone extends over the entire sheet width.

13. Sheet according to one of the claims 11 or 12, **characterized in that** the decrease gradient is between 0.1 and 0.4 mm/metre.

14. Head-up display system for vehicle, comprising a glazing and an image source adapted to the display of information by reflection on the glazing, whose thickness profile is variable, decreasing in at least one zone and more particularly intended to eliminate the double reflection image, **characterized in that** the glazing comprises a plastics material coating (15) covering a monolithic or laminated, glass or plastics material substrate (14), **in that** said coating is located on an outer surface of the glazing and **in that** it is constituted by at least two polyurethane costings, at least one being formed from a polyurethane having a thermoplastic character (23) with mechanical energy absorbing properties and another, so-called surface coating being formed from a thermosetting polyurethane (24), at least one of these coatings having a variable thickness decreasing in at least one zone.
